# EUROPEAN PATENT APPLICATION

(11) **EP 4 760 827 A1**
(43) Date of publication of application: **17.06.2026**
(21) Application number: 25223202.0
(22) Date of filing: 15.12.2025
(51) Int. Cl.: H01M 8/04302, H01M 8/04225, H01M 8/04223, H01M 8/0438, H01M 8/04746

(54) **STARTUP PROCESS CONTROL METHOD AND DEVICE FOR FUEL CELL SYSTEM**

(30) Priority: 16.12.2024 CN 202411877269
(71) Applicant: Bosch Hydrogen Powertrain Systems (Chongqing) Co., Ltd., Chongqing 215021 (CN)
(72) Inventor: LIU, Pengcheng, Chongqing (CN); LI, Changjiang, Chongqing (CN); YANG, Guopeng, Chongqing (CN)
(74) Representative: Bee, Joachim

(57) **Abstract**

The present application discloses a startup process control method for a fuel cell system, comprising: causing the hydrogen subsystem, air subsystem, and thermal management subsystem of the fuel cell system to operate in their respective first state modes for predetermined first time periods; after the first time periods, causing the hydrogen subsystem, air subsystem, and thermal management subsystem of the fuel cell system to operate in their respective second state modes for predetermined second time periods, wherein if before operating in its second state mode, the anode side pressure or cathode side pressure of the fuel cell stack in the air subsystem is less than a predetermined pressure value, then in the first state mode of the air subsystem, the fluid pipeline between the cathode gas outlet of the fuel cell stack and the exhaust discharge subsystem of the fuel cell system is first opened and then closed; if before operating in its second state mode, the anode side pressure or cathode side pressure of the fuel cell stack in the air subsystem is equal to or greater than the predetermined pressure value, then in the first state mode of the air subsystem, the fluid pipeline between the cathode gas outlet of the fuel cell stack and the exhaust discharge subsystem of the fuel cell system is directly closed.

## Description

### Technical Field

The present application generally relates to the technical field of fuel cells, and in particular, relates to a startup process control method and device for a fuel cell system.

### Background

The working principle of a fuel cell requires hydrogen and oxygen to undergo an electrochemical reaction internally. Besides electrical power output as energy, the final products mainly include heat and water, making it an increasingly widely recognized clean power device, especially increasingly adopted in motor vehicles.

As the core of fuel cell vehicles, the vehicle fuel cell system generally includes a fuel cell stack (hereinafter referred to as the stack), a hydrogen supply subsystem (anode), an air supply subsystem (cathode), a thermal management subsystem, and an electrical control subsystem. The stack may, for example, be a proton exchange membrane type stack. The hydrogen supply subsystem and the air supply subsystem are configured respectively for the anode and cathode of the stack, used to selectively supply hydrogen to the anode and air to the cathode. The parameters of the supplied gases, such as quantity, temperature, pressure, and humidity, should ensure that a safe and reliable electrochemical reaction can occur on the catalyst layers within the stack to generate electrical power. The thermal management subsystem is configured to maintain the heat generated during stack operation within a safe range. The electrical control subsystem is used to control the normal operation of the stack (e.g., control of stack output current and power). The normal operation process of the fuel cell system generally comprises startup, load increase and decrease, and shutdown, wherein startup (or simply startup) is the prerequisite for the normal operation of the fuel cell system.

Typically, during the startup process of a vehicle fuel cell system, it is necessary to detect whether the gases received by the anode and cathode of the stack have reached target states (for example, whether parameters such as pressure and/or flow rate meet the standards) and whether the thermal management subsystem is operating normally. Only when all requirements are met will current be allowed to be externally loaded so that the stack outputs power.

However, in actual use of vehicle fuel cell systems, improper shutdown operations in the previous cycle can cause the initial pressure of the anode and/or cathode of the stack to be lower than ambient pressure (e.g., atmospheric pressure) during the next startup. For example, this may be caused by excessive nitrogen accumulation inside the stack. Due to the pressure difference limitation across the proton exchange membrane on both sides of the stack, the anode flush cannot reach the predetermined target state, resulting in startup failure and reduced reliability of the fuel cell system. Moreover, if during startup gases are supplied simultaneously to both the anode and cathode of the stack, excessive gas supply may cause the stack's open-circuit high voltage to be established prematurely. If the startup process is prolonged, it will affect the durability of the stack. Additionally, in existing startup control strategies, the internal initial state of the fuel cell system before startup affects the startup process. Specifically, during startup, while supplying hydrogen to the anode, to ensure the hydrogen concentration meets requirements, the anode flush valve or drain valve needs to be continuously opened. Furthermore, to ensure that the tail gas hydrogen does not exceed standards, the cathode side air valves are selectively opened in sequence. Over long-term use, the sealing performance of these valves varies. Therefore, controlling the startup process solely based on the internal initial state of the stack will reduce the startup success rate of the fuel cell system or reduce the durability of the stack.

### Summary of the Invention

In view of the above issues, the present application aims to provide an improved startup control method and device for a fuel cell system, so as to ensure an increased startup success rate of the fuel cell system and enhance the durability of the stack.

According to one aspect of the present application, there is provided a startup process control method for a fuel cell system, comprising:
causing a hydrogen subsystem, air subsystem, and thermal management subsystem of the fuel cell system to operate in their respective first state modes for predetermined first time periods;
after the first time periods, causing the hydrogen subsystem, air subsystem, and thermal management subsystem of the fuel cell system to operate in their respective second state modes for a predetermined second time period,
wherein, if before operating in its second state mode, the anode side pressure or cathode side pressure of the fuel cell stack in the air subsystem is less than a predetermined pressure value, then in the first state mode of the air subsystem, the fluid pipeline between the cathode gas outlet of the fuel cell stack and the exhaust discharge subsystem of the fuel cell system is first opened and then closed; and if before operating in its second state mode, the anode side pressure or cathode side pressure of the fuel cell stack in the air subsystem is equal to or greater than the predetermined pressure value, then in the first state mode of the air subsystem, the fluid pipeline between the cathode gas outlet of the fuel cell stack and the exhaust discharge subsystem of the fuel cell system is directly closed.

According to another aspect of the present application, there is provided a startup process control device for a fuel cell system configured to control the operation of the hydrogen subsystem, air subsystem, and thermal management subsystem of the fuel cell system to perform the steps according to the aforementioned method.

According to another aspect of the present application, there is provided a computer program product comprising a computer program/instruction, characterized in that when the computer program/instruction is executed by a processor, the steps of the aforementioned method are implemented.

By adopting the above technical measures of the present application, during the startup process of the fuel cell system, the gas pressure at the anode and/or cathode of the stack is used as a judgment criterion to determine the specific operations of various valves in the hydrogen supply subsystem and air supply subsystem of the fuel cell system. This avoids the influence of the initial internal state of the stack on the startup process before startup, prevents the premature establishment of an open-circuit high voltage in the stack, ensures the normal gas supply of the hydrogen supply subsystem, and under the premise of safety and reliability, improves the durability of the stack.

### Brief Description of the Drawings

The principles and various aspects of the present application can be more fully understood from the detailed description below in combination with the following figures. It is to be noted that the scale of the accompanying drawings may differ for purposes of clear illustration, but this does not affect the understanding of the present application. In the accompanying drawings:
FIG. 1 schematically illustrates a basic block diagram of a fuel cell system;
FIG. 2 schematically illustrates a portion of the fuel cell system according to an embodiment of the present application;
FIG. 3 schematically illustrates parameter measurement charts of a fuel cell system startup failure according to the prior art;
FIG. 4 schematically illustrates a flowchart of a startup process control method for a fuel cell system according to an embodiment of the present application;
FIG. 5 schematically illustrates parameter inspection charts of an experiment for startup control of a fuel cell system using the method of the present application; and
FIG. 6 schematically illustrates parameter inspection charts of another experiment for startup control of a fuel cell system using the method of the present application.

### Detailed Description of the Embodiments

In the various drawings of the present application, features with the same structure or similar functions are represented by the same reference signs.

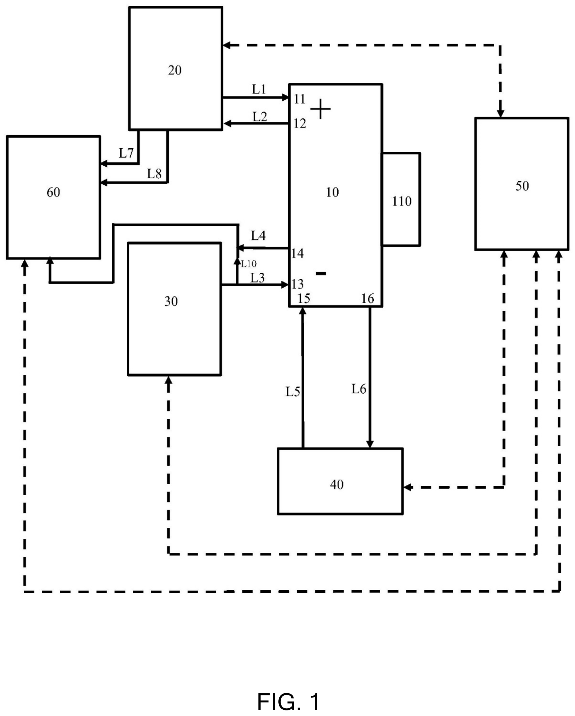

FIG. 1 schematically illustrates a basic block diagram of a fuel cell system. The fuel cell system generally comprises a stack 10, a hydrogen subsystem 20, an air subsystem 30, a thermal management subsystem 40 fluidly connected to the internal flow channels of the stack 10, an electrical control subsystem 50, and an exhaust discharge subsystem 60. For example, the stack 10 may be a proton exchange membrane type stack. The stack 10 is provided with an anode gas inlet 11 and an anode gas outlet 12; a cathode gas inlet 13 and a cathode gas outlet 14; and a coolant inlet 15 and a coolant outlet 16. The anode gas inlet 11 and anode gas outlet 12 are fluidly connected to the hydrogen circuit inside the stack 10; the cathode gas inlet 13 and cathode gas outlet 14 are fluidly connected to the air circuit inside the stack 10; and the coolant inlet 15 and coolant outlet 16 are fluidly connected to the coolant circuit inside the stack 10.

The hydrogen subsystem 20 comprises a hydrogen supply pipeline L1 and a hydrogen recovery pipeline L2, the former being fluidly connected to the anode gas inlet 11, and the latter being fluidly connected to the anode gas outlet 12. The hydrogen subsystem 20 is configured to supply hydrogen to the anode gas inlet 11 via the hydrogen supply pipeline L1 as needed, and to recover excess hydrogen from the anode gas outlet 12 via the hydrogen recovery pipeline L2. The air subsystem 30 comprises an air supply pipeline L3 and an air collection pipeline L4, the former being fluidly connected to the cathode gas inlet 13, and the latter being fluidly connected to the cathode gas outlet 14. In addition, a fluid pipeline L10 may be arranged between the air supply pipeline L3 and the air collection pipeline L4, which is fluidly connected to the inlet of the exhaust discharge subsystem 60. The fluid flow rate and/or pressure through this fluid pipeline L10 can be selectively controlled to, for example, ensure the implementation of an air bypass operation mode during the startup process of the stack 10 as is familiar to those skilled in the art. The air subsystem 30 is configured to supply air to the cathode gas inlet 13 via the air supply pipeline L3 as needed, and to collect air from the cathode gas outlet 14 via the air collection pipeline L4. The thermal management subsystem 40 comprises a liquid supply pipeline L5 and a liquid recovery pipeline L6, the former being fluidly connected to the coolant inlet 15, and the latter being fluidly connected to the coolant outlet 16. The thermal management subsystem 40 is configured to supply coolant to the coolant inlet 15 via the liquid supply pipeline L5 as needed to absorb heat generated during the operation inside the stack 10, and the coolant having absorbed heat is discharged from the coolant outlet 16 via the liquid recovery pipeline L6, then cooled by the thermal management subsystem 40, and can be supplied again to the interior of the stack 10. The coolant circulates in this manner to ensure that the temperature during the operation of the stack 10 does not exceed the standards.

The exhaust discharge subsystem 60 can be configured, for example, to be fluidly connected via fluid pipelines respectively with the hydrogen subsystem 20 and the air subsystem 30, so that excess hydrogen and air can be mixed and discharged within the exhaust discharge subsystem 60 to meet the hydrogen emission requirements of the fuel cell system.

The stack 10 may be equipped with a DC/DC converter 110. The positive and negative terminals of the current output of the stack 10 can be electrically connected to the DC/DC converter 110 via corresponding circuits. The DC/DC converter 110 is configured to adjust the output voltage of the stack 10 to a level matching the load of the fuel cell system when electrically connected to the positive and negative terminals of the current output of the stack 10, to satisfy the power demand of the load. When the stack 10 is operating and its positive and negative terminals of the current output are not yet electrically connected to the DC/DC converter 110, the voltage between the positive and negative terminals can be referred to as the open-circuit voltage. During the startup process of the fuel cell system, it is necessary to avoid the stack 10 prematurely establishing a high open-circuit voltage.

The electrical control subsystem 50 may comprise a control unit or control device, for example a computer, configured to control the stack 10 of the fuel cell system, each subsystem, or their components, to ensure normal operation of the fuel cell system.

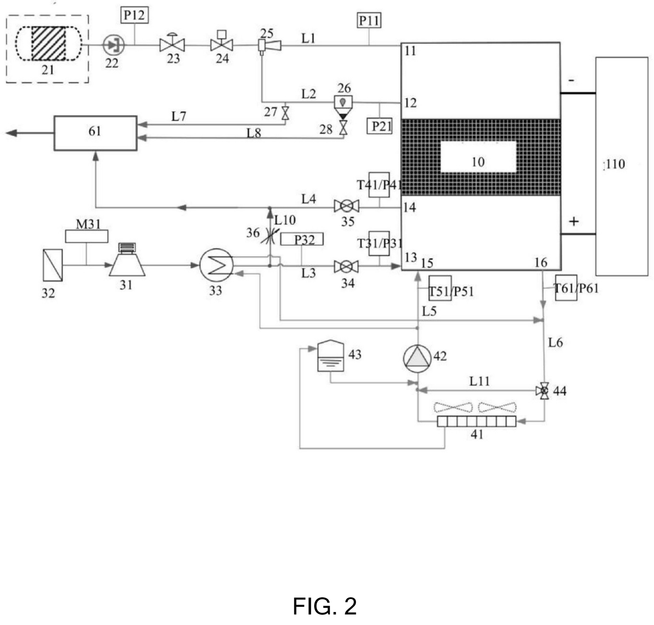

FIG. 2 schematically illustrates a schematic diagram of an example of a fuel cell system according to the present application. Those skilled in the art should understand that this example is provided for illustrative but not limiting purposes. Other forms of fuel cell systems capable of achieving the objectives of the present application can also be envisaged. In FIG. 2, for simplification, the electrical control subsystem 50 is not shown. As shown, the hydrogen subsystem 20 generally comprises a hydrogen source 21 in the form of a high-pressure hydrogen tank. The hydrogen source 21 is fluidly connected to the anode gas inlet 11 of the stack 10 via the hydrogen supply pipeline L1. From the hydrogen source 21 to the anode gas inlet 11, the hydrogen supply pipeline L1 is sequentially provided with a hydrogen filter 22, a pressure reducing valve 23, a proportional (regulating) valve 24, and an ejector 25. In addition, a gas-liquid separator 26 is provided in the hydrogen recovery pipeline L2, and the hydrogen recovery pipeline L2 is fluidly connected to the low-pressure gas suction port of the ejector 25. The specific structure and operating principles of the hydrogen filter 22, pressure reducing valve 23, proportional (regulating) valve 24, ejector 25, and gas-liquid separator 26 can be referred to in the prior art and are not redundantly described here. As shown, the air subsystem 30 generally comprises an air compressor 31 for compressing and outputting ambient air. The outlet of the air compressor 31 is fluidly connected to the cathode gas inlet 13 of the stack 10 via the air supply pipeline L3. An air filter 32 may be provided upstream of the inlet of the air compressor 31 to filter the intake air. Furthermore, in the air supply pipeline L3, from the outlet of the air compressor 31 to the cathode gas inlet 13, an intercooler 33 and an inlet shut-off valve 34 may be sequentially provided. An outlet shut-off valve (or backpressure valve) 35 is provided in the air collection pipeline L4. In addition, a bypass valve 36 is provided in the fluid pipeline L10 between the downstream of the air outlet of the intercooler 33 and the downstream of the outlet shut-off valve 35. The specific structures and operating principles of the air compressor 31, intercooler 33, inlet shut-off valve 34, and outlet shut-off valve 35 may be referred to in the prior art and are not redundantly described here.

The exhaust discharge subsystem 60 is provided with a mixing chamber 61. For example, the outlet of the mixing chamber 61 can be fluidly connected to the exhaust pipe of a motor vehicle. One inlet of the mixing chamber 61 is connected downstream of the gas separation outlet of the gas-liquid separator 26 in the hydrogen return pipeline L2 via pipeline L7, and a flush valve 27 is provided in pipeline L7; furthermore, another inlet of the mixing chamber 61 is connected downstream of the liquid separation outlet of the gas-liquid separator 26 via pipeline L8, and a drainage valve 28 is provided in pipeline L8. When the stack 10 is operating, with the flush valve 27 opened, the gas separated by the gas-liquid separator 26 from the gas discharged from the anode gas outlet 12 (mainly containing hydrogen) can enter the mixing chamber 61 through pipeline L7 for mixing and discharge. In addition, with the flush valve 27 opened, the gas separated by the gas-liquid separator 26 from the gas discharged from the anode gas outlet 12 can re-enter the ejector 25 via the hydrogen return pipeline L2 and be resupplied to the anode gas inlet 11 of the stack 10. By selectively opening and closing the drainage valve 28, the moisture content of the gas resupplied to the anode gas inlet 11 of the stack 10 via the hydrogen return pipeline L2 and ejector 25 can be correspondingly reduced. This is because when the drainage valve 28 is opened, the water vapor separated by the gas-liquid separator 26 from the gas discharged from the anode gas outlet 12 can enter the mixing chamber 61 via pipeline L8 for mixing and discharge. The air return pipeline L4 of the air subsystem 30 is fluidly connected to another inlet of the exhaust discharge subsystem 60. When the air compressor 31 of the air subsystem 30 is operating, the opening degree of the inlet bypass valve 36 may be adjusted to regulate the airflow and/or pressure supplied respectively to the cathode gas inlet 13 and the mixing chamber 61, thereby adjusting the electrochemical reaction process occurring inside the stack 10 and the hydrogen concentration in the exhaust gas.

As shown in the figure, the thermal management subsystem 40 generally comprises a radiator 41 equipped with a fan, a coolant pump 42, and an expansion tank 43. The radiator 41 is connected to the coolant inlet 15 and coolant outlet 16 of the stack 10 via the liquid supply pipeline L5 and liquid recovery pipeline L6, respectively. The coolant pump 42 is provided in the liquid supply pipeline L5, and a three-way valve 44 is provided in the liquid recovery pipeline L6 so that an additional pipeline L11 provided between the liquid supply pipeline L5 and the liquid recovery pipeline L6 can be controlled to open or close via the three-way valve 44. As shown, the liquid supply pipeline L5 and liquid recovery pipeline L6 can also be connected to the intercooler 33 of the air subsystem 30 in a manner well known to those skilled in the art. The coolant pump 42 is configured to drive the circulation of the coolant in the air subsystem 30, thermal management subsystem 40, and stack 10. The design of the three-way valve 44 and pipeline L11 allows the coolant in the thermal management subsystem 40 to operate in a first circulation mode and a second circulation mode. In the first circulation mode, the state of the three-way valve 44 causes the coolant entering the stack 10 to return to the stack 10 via the liquid recovery pipeline L6 and pipeline L11 and then via the liquid supply pipeline L5; in the second circulation mode, the state of the three-way valve 44 causes the coolant entering the stack 10 to return to the stack 10 via the liquid recovery pipeline L6 and the radiator 41 equipped with a fan and then via the liquid supply pipeline L5. The switching between the first and second circulation modes depends on the cooling demand during the operation of the stack 10. When the internal temperature of the stack 10 is high, the thermal management subsystem 40 can operate in the second circulation mode; when the internal temperature of the stack 10 is low, the thermal management subsystem 40 can operate in the first circulation mode. The expansion tank 43 is provided at the inlet of the coolant pump 42 in a manner well known to those skilled in the art, used to eliminate bubbles in the coolant circulated by the thermal management subsystem 40 and to ensure the inlet pressure of the coolant pump 42.

Temperature sensors, pressure sensors, and/or mass flow sensors may be provided in the pipelines of the hydrogen subsystem 20, air subsystem 30, and thermal management subsystem 40 to detect parameters such as temperature, pressure, and/or mass flow rate of the fluids (e.g., hydrogen, air, coolant) transported within the pipelines. For example, a pressure sensor P11 may be provided in the hydrogen supply pipeline L1 between the ejector 25 and the anode gas inlet 11 of the stack 10 to detect the gas pressure input to the anode gas inlet 11 of the stack 10. A pressure sensor P21 may be provided in the hydrogen return pipeline L2 between the gas-liquid separator 26 and the anode gas outlet 12 of the stack 10 to detect the gas pressure discharged from the anode gas outlet 12 of the stack 10. Additionally, in the hydrogen supply pipeline L1, a pressure sensor P12 may be provided between the hydrogen filter 22 and the pressure reducing valve 23 to detect the pressure of hydrogen supplied directly from the hydrogen source 21 into pipeline L1. A pressure sensor P31 is provided in the air supply pipeline L3 between the inlet shut-off valve 34 and the cathode gas inlet 13 of the stack 10 to detect the gas pressure input to the cathode gas inlet 13 of the stack 10. Simultaneously, a temperature sensor T31 may also be provided in the air supply pipeline L3 between the inlet shut-off valve 34 and the cathode gas inlet 13 of the stack 10 to detect the gas temperature input to the cathode gas inlet 13 of the stack 10. Furthermore, a pressure sensor P41 is provided in the air return pipeline L4 between the outlet shut-off valve 35 and the cathode gas outlet 14 of the stack 10 to detect the gas pressure discharged from the cathode gas outlet 14 of the stack 10. A temperature sensor T41 is provided in the air return pipeline L4 between the outlet shut-off valve 35 and the cathode gas outlet 14 of the stack 10 to detect the gas temperature discharged from the cathode gas outlet 14 of the stack 10. A mass flow sensor M31 may be provided in the pipeline between the air filter 32 and the air compressor 31 to detect the mass flow rate of air supplied to the air supply pipeline L3. Additionally, a pressure sensor 32 may be provided in the air supply pipeline L3 between the intercooler 33 and the inlet shut-off valve 34. A pressure sensor P51 may be provided in the liquid supply pipeline L5 between the coolant inlet 15 of the stack 10 and the coolant pump 42 to detect the pressure of the coolant input to the coolant inlet 15 of the stack 10; a temperature sensor T51 may be provided in the liquid supply pipeline L5 between the coolant inlet 15 of the stack 10 and the coolant pump 42 to detect the temperature of the coolant input to the coolant inlet 15 of the stack 10. Furthermore, a pressure sensor P52 may be provided in the liquid return pipeline L6 between the coolant outlet 16 of the stack 10 and the three-way valve 44 to detect the pressure of the coolant discharged from the coolant outlet 16 of the stack 10; a temperature sensor T52 may be provided in the liquid return pipeline L6 between the coolant outlet 16 of the stack 10 and the three-way valve 44 to detect the temperature of the coolant discharged from the coolant outlet 16 of the stack 10.

It should be understood that the above-mentioned sensors can be electrically connected to the control unit or control device of the electrical control subsystem 50 to receive the parameters detected by the sensors and serve as the control basis for the fuel cell system.

During operation of the fuel cell system, high-pressure hydrogen stored in the hydrogen source 21 passes through the hydrogen filter 22 and the pressure reducing valve 23 to reach the proportional valve 24. After regulation by the proportional valve 24, the hydrogen is introduced via the ejector 25 into the anode gas inlet 11, entering the interior of the stack 10 to participate in the electrochemical reaction. Excess hydrogen that does not participate in the electrochemical reaction can be separated from water vapor by the gas-liquid separator 26 at the anode gas outlet 12 and then reintroduced via the ejector 25 into the anode gas inlet 11, further entering the interior of the stack 10 to participate in the electrochemical reaction. The flush valve 27 and drainage valve 28 may be intermittently opened or closed to perform anode flushing, thereby increasing or decreasing the hydrogen concentration or water vapor concentration at the anode gas inlet 11 of the stack 10. With the operation of the air compressor 31, air is drawn in through the air filter 32 and compressed by the air compressor 31 before being supplied to the air supply pipeline L3. The intercooler 33 serves to preliminarily cool the air supplied by the air compressor 31. The specific working principles of the fuel cell system, such as the implementation of anode hydrogen flushing during stack startup and the implementation of cathode air bypass during stack startup, may be referred to those skilled in the art and are not redundantly described herein.

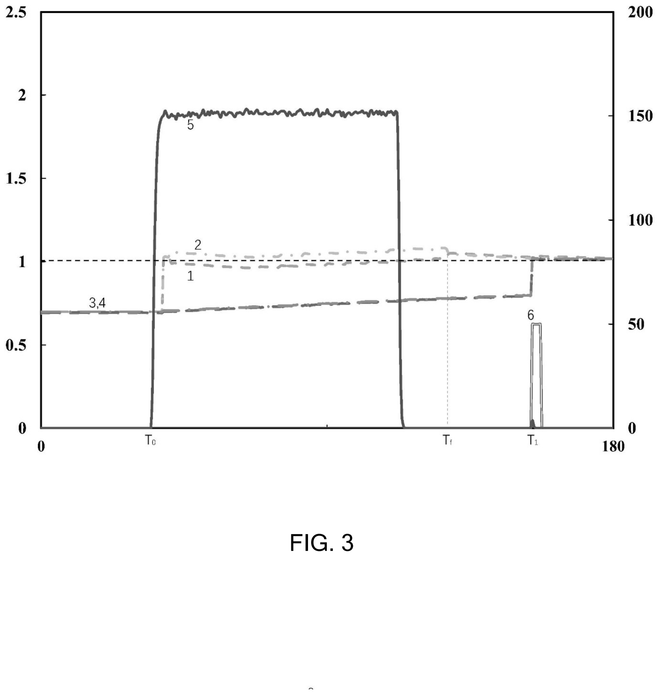

FIG. 3 schematically illustrates parameter measurement charts of a fuel cell system startup failure according to the prior art. In FIG. 3, a curve 1 represents the fluid pressure at the anode gas inlet 11 of the stack 10 (for example, detected by pressure sensor P11); a curve 2 represents the fluid pressure at the anode gas outlet 12 of the stack 10 (for example, detected by pressure sensor P21); a curve 3 represents the fluid pressure at the cathode gas inlet 13 of the stack 10 (for example, detected by pressure sensor P31); a curve 4 represents the fluid pressure at the cathode gas outlet 14 of the stack 10 (for example, detected by pressure sensor P41); a curve 5 represents the air mass flow (for example, detected by mass flow sensor M31); a curve 6 represents the opening degree of the outlet shut-off valve 35. The horizontal axis represents time (unit: seconds), and T0 represents the time point at which the anode flush mode begins during the startup process of the fuel cell system; the left vertical axis represents pressure (unit: bar, referring to the curves 1 to 4), and the right vertical axis represents air mass flow (unit: g/s, referring to the curve 5). In practice, before startup of the fuel cell system, due to residual nitrogen inside the stack 10, the internal pressure of the stack 10 is relatively low (for example, below atmospheric pressure). If, at startup of the fuel cell system, the pressures on both the anode side (including inlet and outlet) and the cathode side (including inlet and outlet) of the stack 10 are below atmospheric pressure (1 bar), then normally, to prevent the fuel cell system from prematurely entering an open-circuit high voltage state and to improve stack durability, the inlet shut-off valve 34 and outlet shut-off valve 35 of the stack 10 are both kept closed. Thus, as the stack 10 enters the anode flush mode (i.e., from the aforementioned time T0 in FIG. 3), the internal pressure of the stack 10 gradually rises, while the pressure on the cathode side of the stack 10 remains below atmospheric pressure. As hydrogen on the anode side slowly permeates through the interior of the stack 10 to the cathode side, the pressure on the cathode side (reflected by curves 3 and 4, which are shown to overlap considerably) also slowly rises but never reaches atmospheric pressure. Consequently, the pressure on the anode side cannot reach the target value required for startup of the fuel cell system, resulting in anode flush failure at time Tf. However, the inventors of the present application have noticed that if the outlet shut-off valve 35 is manually opened and then closed at time T1, the pressure on the cathode side can rise and reach atmospheric pressure. This is mainly because opening the outlet shut-off valve 35 releases the nitrogen previously accumulated inside the stack 10 and ensures that the interior of the stack 10 reaches atmospheric pressure. Closing the outlet shut-off valve 35 again ensures back pressure at the cathode gas outlet 14 of the stack 10, so that with continued hydrogen supply on the anode side, the pressure on the cathode side can reach atmospheric pressure after time T1, thereby ensuring that the pressure on the anode side may reach the target value required for startup of the fuel cell system.

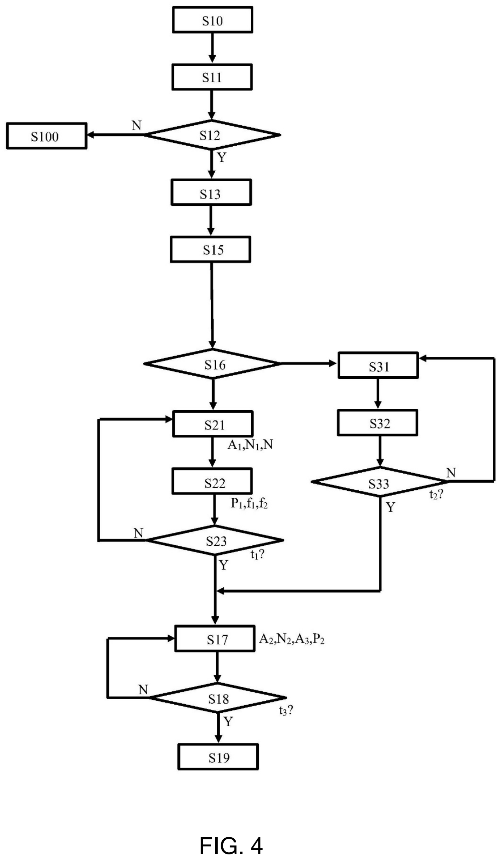

In view of the above discovery, the inventors of the present application propose a startup process control method for the fuel cell system. FIG. 4 schematically illustrates a flowchart of a startup process control method for a fuel cell system according to an embodiment of the present application. It should be noted that the methods or method steps mentioned in the context of the present application can be encoded and stored in the form of computer programs and executed by a computer of the control unit or control device of the electrical control subsystem 50 as needed. For example, the computer program can be stored in data storage media such as computer-readable storage media or cloud servers and called and executed via corresponding computer interfaces or network interfaces.

In the embodiment of the present application, the valves mentioned above in the fuel cell system may be solenoid valves and can be controlled to operate by a control unit or control device of the electrical control subsystem 50. Components of the fuel cell system capable of operation, such as the air compressor 31, coolant pump 42, and radiator fan, can also be controlled to operate by the control unit or control device of the electrical control subsystem 50. Those skilled in the art will understand that although the method of the present application is described below with reference to a specific example of the fuel cell system shown in FIG. 2, the specific example of the fuel cell system illustrated in FIG. 2 is only intended to explain the basic principles of the method of the present application. When describing valve control, it should be understood that this is for the purpose of controlling the flow rate and/or pressure of the fluid flowing through the relevant fluid pipelines.

In step S10, the fuel cell system is triggered to enter the startup process. In step S11, the fuel cell system performs a self-check. In step S12, it is determined whether the self-check has passed. If the result is negative, the fuel cell system performs self-protection and stops the startup (step S100); if positive, proceed to step S13. In step S13, the hydrogen subsystem 20, air subsystem 30, and thermal management subsystem 40 of the fuel cell system each begin operation, for example, entering their respective state modes. In step S15, the anode side pressure value and cathode side pressure value of the stack 10 are detected and acquired. For example, the anode side pressure value may be the fluid pressure value in either the hydrogen supply pipeline L1 or the hydrogen recovery pipeline L2, or may include any one of the pressure values at the anode gas inlet 11 and anode gas outlet 12. The cathode side pressure value may include any one of the pressure values at the cathode gas inlet 13 and cathode gas outlet 14. Next, in step S16, it is determined whether any one of the anode side pressure value or cathode side pressure value is below a predetermined pressure value, for example, atmospheric pressure. For instance, during this determination, any one of the pressure values at the anode gas inlet 11, anode gas outlet 12, cathode gas inlet 13, and cathode gas outlet 14 can be compared with atmospheric pressure. If the determination in step S16 is affirmative, proceed to step S21; if negative, proceed to step S31.

In step S21, the air subsystem 30 enters its first state mode. In the first state mode of the air subsystem 30, the fluid pipeline between the cathode gas outlet 14 of the stack 10 and the exhaust discharge subsystem 60 of the fuel cell system is first opened and then closed. For example, in the example shown in FIG. 2, the inlet bypass valve 36 in the air supply pipeline L3 of the air subsystem 30 is opened with an opening degree set to A1; the motor speed of the air compressor 31 is set to N1 to ensure that a specific air mass flow rate is supplied into the air supply pipeline L3 at an appropriate pressure; the inlet shut-off valve 34 in the air supply pipeline L3 is closed; and the outlet shut-off valve 35 in the air return pipeline L4 is first opened and then closed, so that the interior of the stack 10 can reach atmospheric pressure. Those skilled in the art will understand that the parameters such as opening degree described here are preferably set to achieve air bypass and the air supply required for stack 10 startup. Therefore, the first state mode of the air subsystem 30 includes the air bypass operation mode.

In step S22, the hydrogen subsystem 20 enters its first state mode. In the first state mode of the hydrogen subsystem 20, the proportional valve 24 is opened, and as hydrogen is supplied from the hydrogen source 21 into the hydrogen supply pipeline L1, the flush valve 27 and drainage valve 28 are intermittently opened or closed at frequencies f1 and f2, respectively, to perform anode flushing, regulate the fluid state in the hydrogen supply pipeline L1, and control the anode side pressure of the stack 10 to P1. Those skilled in the art understand that valve control, such as the frequency of opening and closing, is preferably set to achieve the hydrogen flushing required for stack 10 startup. Therefore, the first state mode of the hydrogen subsystem 20 comprises the hydrogen flush operation mode.

In step S21, the thermal management subsystem 40 may enter its first state mode. In the first state mode of the thermal management subsystem 40, the coolant pump 42 operates, and the motor speed of the coolant pump 42 is set to N.

Then, in step S23, it is determined whether time t1 has been reached. If the determination in step S23 is negative, continue step S21; if positive, proceed to step S17.

In step S31, the hydrogen subsystem 20, air subsystem 30, and thermal management subsystem 40 also each enter the aforementioned first state mode. In step S32, the air subsystem 30 enters the first state mode. Since none of the anode side pressure value or cathode side pressure value is judged to be below atmospheric pressure, it is unnecessary to ensure that the interior of the stack 10 reaches atmospheric pressure by first opening and then closing the fluid pipeline between the cathode gas outlet 14 of the stack 10 and the exhaust discharge subsystem 60 (for example, by first opening and then closing the outlet shut-off valve 35 in the air return pipeline L4). Instead, the fluid pipeline between the cathode gas outlet 14 of the stack 10 and the exhaust discharge subsystem 60 is directly closed (for example, by closing the outlet shut-off valve 35 in the air return pipeline L4). It should be understood that in the first state mode of the air subsystem 30, the fluid flow rate and/or pressure flowing through any one of the air supply pipeline L3 and air collection pipeline L4, as well as the fluid flow rate and/or pressure flowing through the fluid pipeline L10 between the air supply pipeline L3 and air collection pipeline L4, are controlled to ensure that the air supply to the cathode side of the stack 10 meets the startup process requirements of the stack 10.

Then, in step S33, it is determined whether time t2 has been reached. If the determination in step S33 is negative, continue step S31; if positive, proceed to step S17.

In step S17, the air subsystem 30 enters its second state mode. In the second state mode of the air subsystem 30, the fluid flow rate and/or pressure flowing through the air supply pipeline L3 and the fluid flow rate and/or pressure flowing through the fluid pipeline L10 between the air supply pipeline L3 and air collection pipeline L4 are controlled in a manner different from that in the first state mode of the air subsystem 30. For example, in the embodiment illustrated in FIG. 2, the inlet bypass valve 36 in the air supply pipeline L3 of the air subsystem 30 is opened with its opening degree set to A2; the motor speed of the air compressor 31 is set to N2; the inlet shut-off valve 34 is fully opened, and the outlet shut-off valve 35 is opened with an opening degree of A3. The hydrogen subsystem 20 enters its second state mode, wherein the fluid flow rate and/or pressure in the hydrogen supply pipeline L1 flowing through the hydrogen subsystem 20, as well as the fluid flow rate and/or pressure in the fluid pipeline between the hydrogen recovery pipeline L2 and the exhaust discharge subsystem 60 of the fuel cell system, can be controlled differently from those in the first state mode of the hydrogen subsystem 20. For instance, in the example shown in FIG. 2, in the second state mode of the hydrogen subsystem 20, the proportional valve 24 can be adjusted to maintain the anode side pressure of the stack 10 at P2. Here, valve controls such as setting the opening degree or motor speed are configured to ensure successful startup of the stack 10, for example, by reasonably establishing the open-circuit voltage.

At step S18, it is determined whether the time t3 has been reached and/or whether the stack 10 has established the open-circuit voltage. If the determination in step S18 is negative, continue step S17; if positive, proceed to step S19. At step S19, the startup process of the fuel cell system is completed, the stack 10 begins to connect to the load and output current, entering the idle state.

It should be understood that the parameters described in the state modes of the hydrogen subsystem 20, air subsystem 30, and thermal management subsystem 40 in the above method steps-such as pressures P1, P2; speeds N1, N2, N; opening degrees A1, A2, A3; and times t1, t2, t3-are merely illustrative. These parameters are pre-calibrated through experiments before factory shipment to ensure that the fuel cell system can successfully start up (i.e., the stack 10 meets the requirements for establishing the open-circuit voltage). Moreover, for example, in steps S21, S31, and S18, to meet the operational requirements of the respective subsystems, other components such as valves can be correspondingly operated. For example, during experimental calibration, adjusting the aforementioned parameters enables verification of whether the fuel cell system can achieve successful startup, and based on the results, the optimal values for the first time period and/or the second time period are determined. In summary, according to the embodiments of the present application, the aforementioned first time period and/or second time period are set such that the stack can establish the open-circuit voltage after the second time period.

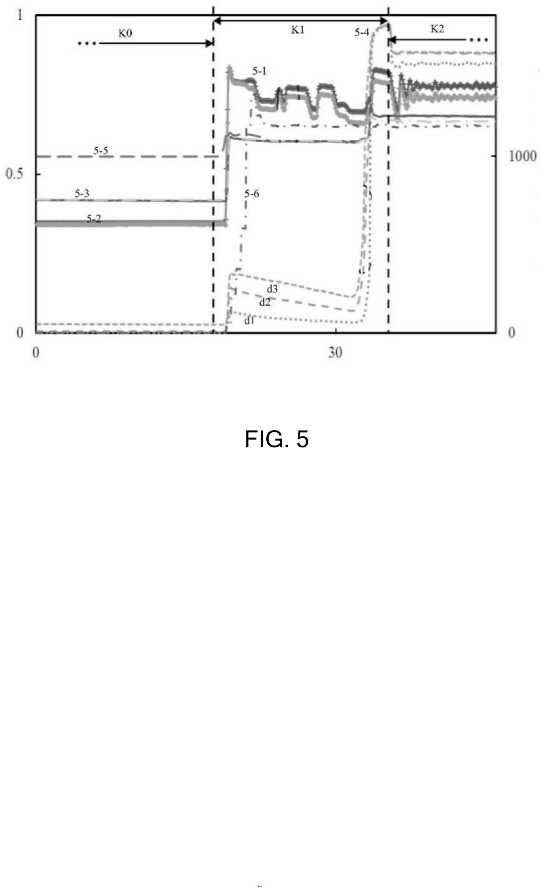

FIG. 5 schematically illustrates a parameter detection diagram of an experiment using the method of the present application for startup control of a fuel cell system. In FIG. 5, a curve 5-1 represents the pressure at the anode gas inlet 11; a curve 5-2 represents the pressure at the anode gas outlet 12; a curve 5-3 represents the pressure at the cathode gas inlet 13; a curve 5-4 represents the pressure at the cathode gas outlet 14; a curve 5-5 represents the pressure between the intercooler 33 and the inlet shut-off valve 34 in the air supply pipeline L3; a curve 5-6 represents the motor speed of the coolant pump 42; a curve d1 represents the minimum single cell voltage of the stack; a curve d2 represents the average single cell voltage of the stack; a curve d3 represents the maximum single cell voltage of the stack. In FIG. 5, the horizontal axis represents time; the left vertical axis represents pressure (unit: bar, referring to curves 5-1 to 5-5); the right vertical axis represents speed (unit: rad/min, referring to curve 5-6). Symbol K0 denotes the state of the fuel cell system before startup; symbol K1 denotes the fuel cell system during startup; symbol K2 denotes that the fuel cell system startup has ended. It can be seen that before startup of the fuel cell system, the pressures on both the anode side (curves 5-1, 5-2) and cathode side (curves 5-3, 5-4) of the stack 10 are below atmospheric pressure. That is, the internal gases of the fuel cell system have not yet reached a relative equilibrium state after the previous shutdown. When the fuel cell system enters startup, after completing self-check, the hydrogen subsystem 20, air subsystem 30, and thermal management subsystem 40 each operate in the first state mode. For example, the inlet bypass valve 36 can be opened and maintained at 100% opening; the air compressor 31 operates to supply an air mass flow rate of about 60 g/s into the air supply pipeline L3; the coolant pump 42 is turned on with its motor speed maintained at 1200 rad/min; meanwhile, the inlet shut-off valve 34 is closed. Because, as shown in FIG. 5, the anode side and cathode side pressures of the stack 10 are below atmospheric pressure, in the first state mode of the air subsystem 30, the outlet shut-off valve 35 is first opened and then closed, allowing the cathode side pressure to quickly reach atmospheric pressure. Although opening the outlet shut-off valve 35 causes a small amount of air to enter the interior of the stack 10, slightly increasing the single cell voltage of the stack 10, tests show that this increase is far below the maximum safe voltage of a single cell and can therefore be neglected. Additionally, the proportional valve 24 is adjusted to ensure that the anode side pressure is above atmospheric pressure (for example, maintained at 1.3 bar), thereby promoting anode flushing. The flush valve 27 and drainage valve 28 of the hydrogen subsystem 20 can be intermittently opened or closed. After operating in the first state mode for a predetermined first running time (e.g., 15 seconds), the hydrogen subsystem 20, air subsystem 30, and thermal management subsystem 40 each enter the second state mode. In the second state mode of the air subsystem 20, the inlet shut-off valve 34 is fully opened at 100% opening; the opening degree of the inlet bypass valve 36 is slightly reduced; and the outlet shut-off valve 35 is adjusted to 15% opening, allowing air to flow through the air supply pipeline L3 into the cathode gas inlet 13 of the stack 10, establishing a cathode side pressure of approximately 1.15 bar. In the second state mode of the thermal management subsystem 40, the motor speed of the coolant pump 42 can be maintained unchanged. In the second mode of the hydrogen subsystem 20, the proportional valve 24 is adjusted to ensure that the pressure difference between the cathode side and the anode side of the stack 10 remains within the mechanical tolerance range of the proton exchange membrane inside the stack 10. Upon reaching a predetermined second time period (e.g., 5 seconds) and thereby successfully establishing the open-circuit voltage, the fuel cell system startup is completed. Simultaneously, the fuel cell system can be connected to a load and output current, thus entering a normal idle state.

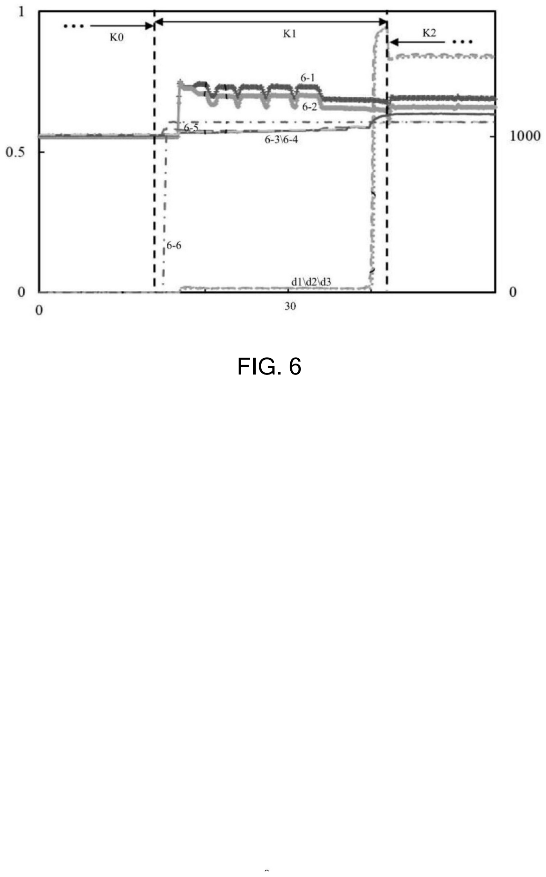

FIG. 6 schematically illustrates a parameter detection diagram of another experiment using the method of the present application for startup control of a fuel cell system. In FIG. 6, a curve 6-1 represents the pressure at the anode gas inlet 11; a curve 6-2 represents the pressure at the anode gas outlet 12; a curve 6-3 represents the pressure at the cathode gas inlet 13; a curve 6-4 represents the pressure at the cathode gas outlet 14; a curve 6-5 represents the pressure between the intercooler 33 and the inlet shut-off valve 34 in the air supply pipeline L3; a curve 6-6 represents the motor speed of the coolant pump 42; a curve d1 represents the minimum single cell voltage of the stack; a curve d2 represents the average single cell voltage of the stack; a curve d3 represents the maximum single cell voltage of the stack. In FIG. 6, the horizontal axis represents time; the left vertical axis represents pressure (unit: bar, referring to curves 6-1 to 6-5); the right vertical axis represents speed (unit: rad/min, referring to curve 6-6). Symbol K0 denotes the state of the fuel cell system before startup; symbol K1 denotes the fuel cell system during startup; symbol K2 denotes that the fuel cell system startup has ended. As shown in FIG. 6, before startup, the pressures on the cathode side (curves 6-1 and 6-2) and the anode side (curves 6-3 and 6-4, which are shown to overlap considerably) are approximately atmospheric pressure, and the internal gases of the fuel cell system have reached a relatively balanced state after a long shutdown period. Upon entering startup, and after the fuel cell system completes self-check, the hydrogen subsystem 20, air subsystem 30, and thermal management subsystem 40 each operate in their respective first state modes. It is evident that the cathode and anode side pressures do not fall below atmospheric pressure; therefore, the bypass valve 36 is controlled to remain open with an opening degree of 100%. The air compressor 31 is started and set to a corresponding speed to achieve an air flow rate of approximately 30 g/s. The coolant pump 42 is activated and its motor speed is set to 1100 rad/min.
Both the cathode inlet shut-off valve 34 and outlet shut-off valve 35 are closed. The proportional valve 24 is opened and the anode pressure is controlled to approximately 1.3 bar. The anode enters the flush stage, where the anode flush valve and drainage valve intermittently open. After reaching the target time of 14 seconds, the process of establishing the open-circuit voltage begins. Then, the cathode inlet shut-off valve is fully opened, i.e., opening degree 100%; the cathode inlet bypass valve opening degree is reduced; the cathode outlet shut-off valve (backpressure valve) opening degree is set to 20%, allowing air to flow directly into the cathode side of the stack, thereby establishing a corresponding pressure on the cathode side of approximately 1.1 bar. The coolant pump maintains its rotational speed unchanged. The proportional valve 24 is controlled to maintain the pressure difference between the cathode and anode sides within the mechanical tolerance of the membrane. After successfully establishing the open-circuit voltage and reaching the target time of 4 seconds, the fuel cell system startup is completed. The fuel cell system begins to draw a current of approximately 30 A and enters an idle operating state.
In practice, FIG. 6 demonstrates the scenario where, according to the method of the present application, if the anode side pressure or cathode side pressure of the stack in the fuel cell system is equal to or greater than a predetermined pressure value during startup, the outlet shut-off valve is kept closed directly throughout the startup process.

Although specific embodiments of the present application have been described in detail here, they are provided solely for explanatory purposes and should not be construed as limiting the scope of the application. In addition, it should be clear to those skilled in the art that the various examples described in this Description can be used in combination with each other. Various substitutions, modifications, and alterations can be conceived without departing from the spirit and scope of the present application.

## Claims

1. A startup process control method for a fuel cell system, comprising:
causing a hydrogen subsystem (20), air subsystem (30), and thermal management subsystem (40) of the fuel cell system to operate in their respective first state modes for predetermined first time periods (t1, t2); and
after the first time periods (t1, t2), causing the hydrogen subsystem (20), air subsystem (30), and thermal management subsystem (40) of the fuel cell system to operate in their respective second state modes for a predetermined second time period (t3),
wherein, if before operating in its second state mode, the anode side pressure or cathode side pressure of the fuel cell stack (10) in the air subsystem (30) is less than a predetermined pressure value, then in the first state mode of the air subsystem (30), the fluid pipeline between the cathode gas outlet (14) of the fuel cell stack (10) and the exhaust discharge subsystem (60) of the fuel cell system is first opened and then closed; and if before operating in its second state mode, the anode side pressure or cathode side pressure of the fuel cell stack in the air subsystem (30) is equal to or greater than the predetermined pressure value, then in the first state mode of the air subsystem (30), the fluid pipeline between the cathode gas outlet (14) of the fuel cell stack (10) and the exhaust discharge subsystem (60) of the fuel cell system is directly closed.

2. The method according to Claim 1, **characterized in that** the anode side pressure of the stack (10) comprises the fluid pressure in any of the hydrogen supply pipeline (L1) and hydrogen recovery pipeline (L2) of the hydrogen subsystem (20), and the cathode side pressure of the stack (10) comprises the fluid pressure in any of the air supply pipeline (L3) and air collection pipeline (L4) of the air subsystem (30), with predetermined pressure value being atmospheric pressure.

3. The method according to Claim 2, **characterized in that** the anode side pressure comprises the fluid pressure at any of the anode gas inlet (11) and anode gas outlet (12) of the stack (10), and the cathode side pressure comprises the fluid pressure at any of the cathode gas inlet (13) and cathode gas outlet (14) of the stack (10).

4. The method according to Claim 2 or 3, **characterized in that** in the first state mode of the air subsystem (30), the fluid flow rate and/or pressure flowing through any of the air supply pipeline (L3) and air collection pipeline (L4) is controlled, and the fluid flow rate and/or pressure flowing through the fluid pipeline (L10) between the air supply pipeline (L3) and the air collection pipeline (L4) is controlled, to ensure air supply to the cathode side of the stack (10); the first state mode of the hydrogen subsystem (20) operates after the first state mode of the air subsystem (30), and in the first state mode of the hydrogen subsystem (20), the fluid flow rate and/or pressure flowing through the hydrogen supply pipeline (L1) of the hydrogen subsystem (20) and the fluid flow rate and/or pressure flowing through the fluid pipeline between the hydrogen recovery pipeline (L2) and the exhaust discharge subsystem (60) of the fuel cell system are controlled to ensure hydrogen supply to the anode side of the stack (10).

5. The method according to Claim 4, **characterized in that** the first state mode of the air subsystem (30) comprises an air bypass operation mode, and the first state mode of the hydrogen subsystem (20) comprises a hydrogen flush operation mode.

6. The method according to Claim 5, **characterized in that** in the second state mode of the air subsystem (30), the fluid flow rate and/or pressure flowing through the air supply pipeline (L3) and the fluid flow rate and/or pressure flowing through the fluid pipeline (L10) between the air supply pipeline (L3) and the air collection pipeline (L4) are controlled in a manner different from that in the first state mode of the air subsystem (30); the second state mode of the hydrogen subsystem (20) operates after the second state mode of the air subsystem (30), and in the second state mode of the hydrogen subsystem (20), the fluid flow rate and/or pressure flowing through the hydrogen supply pipeline (L1) and the fluid flow rate and/or pressure flowing through the fluid pipeline between the hydrogen recovery pipeline (L2) and the exhaust discharge subsystem (60) are controlled in a manner different from that in the first state mode of the hydrogen subsystem (20).

7. The method according to Claim 6, **characterized in that** the first time periods (t1, t2) and/or the second time period (t3) are configured such that the stack (10) can establish an open-circuit voltage after the second time period (t3).

8. The method according to Claim 4, **characterized in that** an outlet shut-off valve (35) is provided in the air collection pipeline (L4), an inlet shut-off valve (34) is provided in the air supply pipeline (L3), and an inlet bypass valve (36) is provided in the fluid pipeline (L10) between the air supply pipeline (L3) and the air collection pipeline (L4); in the first state mode of the air subsystem (30), the operation of the outlet shut-off valve (35) occurs after the operations of the inlet bypass valve (36) and the inlet shut-off valve (34).

9. A startup process control device for a fuel cell system configured to control the operation of the hydrogen subsystem (20), air subsystem (30), and thermal management subsystem (40) of the fuel cell system to perform the steps according to any one of Claims 1 to 8.

10. A computer program product comprising a computer program/instruction, **characterized in that** when the computer program/instruction is executed by a processor, it implements the steps of any one of Claims 1 to 8.
